# EUROPÄISCHE PATENTSCHRIFT

(11) **EP 2 237 600 B1**
(45) Veröffentlichungstag und Bekanntmachung des Hinweises auf die Patenterteilung: **04.07.2018**
(21) Anmeldenummer: 10158603.0
(22) Anmeldetag: 31.03.2010
(51) Int. Cl.: H04L 12/851, H04L 12/26, H04W 28/22, H04L 12/927, H04L 12/911, H04L 12/823, H04L 12/813

(54) **BEGRENZUNG DER DATENÜBERTRAGUNGSRATE FÜR EINE DATENVERBINDUNG IN EINEM MOBILFUNKSYSTEM**
RESTRICTING A DATA RATE FOR A DATA CONNECTION IN A MOBILE NETWORK
LIMITATION DE LA FRÉQUENCE DE TRANSMISSION DE DONNÉES POUR UNE CONNEXION DE DONNÉES DANS UN SYSTÈME MOBILE

(30) Priorität: 03.04.2009 DE 102009016094
(43) Veröffentlichungstag der Anmeldung: 06.10.2010
(73) Patentinhaber: Vodafone Holding GmbH, 40213 Düsseldorf (DE)
(72) Erfinder: Grosche, Uwe, 41462 Neuss (DE)
(74) Vertreter: Jostarndt Patentanwalts-AG

(56) Entgegenhaltungen:
- US-A1- 2002 101 919
- US-A1- 2003 135 639
- US-A1- 2008 276 000
- Cisco Systems: "Mobile Content Filtering and Control"[Online] 2007, Seiten 1-7, XP002580075 Gefunden im Internet: URL:http://www.cisco.com/en/US/solutions/c ollateral/ns341/ns523/ns278/net_implementa tion_white_paper0900aecd8025e7f9.pdf> [gefunden am 2010-04-27]
- Cisco Systems: "Cisco Intelligent Service Gateway"[Online] 2006, Seiten 1-4, XP002580076 Product Bulletin No. 3285 Gefunden im Internet: URL:http://www.cisco.com/en/US/prod/collat eral/iosswrel/ps6537/ps6549/ps6588/prod_bu lletin0900aecd804a2c70.pdf> [gefunden am 2010-04-27]

## Beschreibung

### Technisches Gebiet

Die Erfindung bezieht sich auf die Begrenzung einer maximalen Datenübertragungsrate einer Datenverbindung in einem Mobilfunksystem. Insbesondere betrifft die Erfindung ein Verfahren zum Begrenzen einer Datenübertragungsrate einer paketvermittelnden Datenverbindung über eine Vermittlungseinheit eines Mobilfunknetzwerks zu einem mobilen Endgerät sowie ein zur Durchführung des Verfahrens geeignetes Mobilfunksystem.

### Hintergrund der Erfindung

Mobilfunksysteme umfassen üblicherweise ein Kernnetzwerk, welches im Folgenden auch als Mobilfunknetzwerk bezeichnet wird, und ein funkbasiertes Zugangsnetzwerk, das in der Regel zellular aufgebaut ist. Das Mobilfunknetzwerk umfasst insbesondere Vermittlungseinheiten, die den Aufbau von Datenverbindungen zu einem mobilen Endgerät bzw. von einem mobilen Endgerät zu einer Gegenstelle steuern und für die Weiterleitung von Daten zuständig sind, die von dem mobilen Endgeräte gesendet werden bzw. an das Endgerät übertragen werden sollen. Über das Zugangsnetzwerk wird die Verbindung zwischen dem mobilen Endgerät und dem Mobilfunknetzwerk hergestellt.

Im Mobilfunk erfolgt die Datenübertragung zu mobilen Endgeräten über Datenübertragungskanäle, die den mobilen Endgeräten üblicherweise durch das funkbasierte Zugangsnetzwerk zugewiesen werden. Im Gegensatz zu einer leitungsvermittelnden Datenverbindung werden die funktechnischen Ressourcen bei einer paketvermittelnden Datenverbindung einzelnen Endgeräten nicht fest zugewiesen. Hierdurch können Ressourcen des Zugangsnetzwerks einzelnen Endgeräten flexibel zugeteilt werden. Dementsprechend braucht sich die Ressourcenplanung in einem paketvermittelnden Mobilfunksystem bzw. in dem paketvermittelnden Teil eines Mobilfunksystems nicht in erster Linie nach der Anzahl der Endgeräte zu richten, die zeitgleich aus einer Zelle des Zugangsnetzwerks auf das Mobilfunknetzwerk zugreifen, sondern nach dem Datenvolumen, das gleichzeitig an die Endgeräte in einer Zelle übertragen bzw. von diesen abgesendet wird.

Um eine bessere Ressourcenplanung zu ermöglichen, kann es vorgesehen sein, dass die Datenübertragungsrate von Datenverbindungen zu einzelnen Endgeräten beschränkt wird. Hierdurch können die insgesamt benötigten Ressourcen verringert werden. Die US 2008/0276000 A1 beschreibt diesbezüglich ein Verfahren, bei dem die maximale Datenübertragungsrate einer Datenverbindung zu einem Endgerät verringert wird, nachdem ein vorgegebenes Datenvolumen erreicht worden ist. Es wird jedoch nicht beschrieben, wie eine derartige Verringerung der Datenübertragungsrate vorgenommen werden kann.

Die Veröffentlichung Cisco Systems, "Mobile Content Filtering and Control" beschreibt eine Filterung von Inhalten aus dem Internet, die zu einem Teilnehmer übertragen werden. Zur Filterung wird ein Service Gateway eingesetzt, der den Datenstrom überwacht und Anforderungen von Internetressourcen ggf. zu einer Filteranwendung weiterleitet, die anhand von Kriterien prüft, ob die Ressource von dem Nutzer angefordert werden darf.

Die US 2003/0135639 A1 befasst sich mit der Übermittlung von Fernüberwachungsdaten von Computern in einem Rechnernetz eines Nutzers an ein Fernüberwachungssystem. In dem Rechnernetz wird ein Relay-Server eingesetzt, über den Nachrichten mit den Überwachungsdaten übermittelt werden und der die Datenübertragung in Abhängigkeit von der Priorität der Nachrichten zu voreingestellten Zeiten drosseln kann. Hierzu wird die Anzahl der Nachrichten mit einer bestimmten Priorität, die in einer bestimmten Zeitspanne übertragen werden kann, begrenzt.

Die US 2002/0101919 A1 beschreibt ein Verfahren, bei dem eine mittlere Datenübertragungsrate für eine Datenübertragung in einem Netz für ein bestimmtes Zeitintervall festgelegt wird, und bei dem Datenpakte insbesondere in Abhängigkeit von der vorgegebenen Datenüberragungsrate weitergeleitet oder verworfen werden.

### Darstellung der Erfindung

Es ist eine Aufgabe der vorliegenden Erfindung, einen Mechanismus zu schaffen, der eine möglichst einfache Veränderung, insbesondere eine Beschränkung, einer maximalen Datenübertragungsrate einer paketvermittelnden Datenverbindung zu einem Endgerät in einem Mobilfunksystem ermöglicht.

Die Aufgabe wird durch ein Verfahren mit den Merkmalen des Patentanspruchs 1 und durch ein Mobilfunksystem mit den Merkmalen des Patentanspruchs 8 gelöst. Ausführungsformen des Verfahrens und des Mobilfunksystems sind in den abhängigen Ansprüchen angegeben.

Die Erfindung beinhaltet die Idee, die Datenübertragungsrate für ein Endgerät in einer Vermittlungseinheit des Mobilfunknetzwerks zu beschränken. Dies geschieht dadurch, dass in einem Zeitraum lediglich eine bestimmte Anzahl von Datenpaketen an das Endgerät weitergeleitet wird. Darüber hinaus wird die Weiterleitung von Datenpaketen blockiert. Nach Ablauf des ersten Zeitintervalls wird die Blockierung vorzugsweise wieder aufgehoben und das erste Zeitintervall neu gestartet. Hierdurch kann in einfacher Weise eine Beschränkung der maximalen Datenübertragungsrate herbeigeführt werden. Vorteilhaft erfolgt die Beschränkung dabei kernnetzwerkseitig, so dass eine Veränderung des üblicherweise vorgesehenen funkbasierten Zugangs-netzwerks, über das auf das Mobilfunknetzwerk zugegriffen wird, nicht erforderlich ist.

Eine Ausgestaltung des Verfahrens und des Mobilfunksystems sieht vor, dass Datenpakete, deren Weiterleitung blockiert wird, verworfen werden, wobei die Datenverbindung ein Datenübertragungsprotokoll nutzt, bei dem Datenpakete, die das Endgerät nicht erreichen, von dem Absender erneut gesendet werden. Ein Vorteil dieser Ausgestaltung besteht in einer besonders einfachen Handhabung der blockierten Datenpakete. Vorteilhaft wird dabei jedoch unter Ausnutzung einer üblichen Eigenschaft von Datenübertragungsprotokollen jedoch sichergestellt, dass alle vorgesehenen Datenpakete das Endgerät errei-chen.

Die Vermittlungseinheit leitet Datenpakete nach Maßgabe eines der Datenverbindung zugeordneten Datenübertragungsprofils an das Endgerät weiter, wobei wenigstens ein erstes und ein zweites Datenübertragungsprofil vorgesehen sind, die unterschiedliche weiterzuleitende Datenvolumina je Zeiteinheit vorsehen. Diese Weiterbildung besitzt den Vorteil, dass die Festlegung der maximalen Datenübertragungsrate der Datenverbin dung in einfacher Weise dadurch erfolgen kann, dass der Datenverbindung ein Datenübertragungsprofil zugeordnet wird.

Insbesondere wird damit ermöglicht, dass die maximale Datenübertragungsrate dadurch verändert werden kann, dass das der Datenverbindung bzw. dem Endgerät zugeordnete Datenübertragungsprofil gewechselt wird. Es ist daher vorgesehen, dass das erste Datenübertragungsprofil durch das zweite Datenübertragungsprofil ersetzt wird, um die Datenübertragungsrate zu beschränken. Vorteilhaft wird hierdurch lediglich die Zuordnung eines Datenübertragungsprofils zu einer bestehenden Datenverbindung verändert. Die Datenverbindung kann hierbei aktiv bleiben und muss nicht unterbrochen werden.

Die Ersetzung des ersten Datenübertragungsprofils durch das zweite Datenübertragungsprofil wird in einer Ausgestaltung des Verfahrens und des Mobilfunksystems aufgrund eines von einer Steuereinheit an die Vermittlungseinheit gesendeten Steuerbefehls vorgenommen. Bei der Steuereinheit kann es sich insbesondere um einen so genannten AAA-Server handeln (AAA: Authentication, Authorization, Accounting), der üblicherweise zur Steuerung einer Vermittlungseinheit vorgesehen ist.

Vorzugsweise kommuniziert die Steuereinheit mit der Vermittlungseinheit unter Verwendung eines AAA-Protokolls, insbesondere unter Verwendung des RADIUS-Protokolls (RADIUS: Remote Authentication Dial-In User Service). Dabei beinhaltet eine Ausgestaltung des Verfahrens und des Mobilfunksystems, dass die Ersetzung aufgrund einer Change-of-Authorization-Anforderung erfolgt, die von der Steuereinheit an die Vermittlungseinheit übermittelt wird. Eine derartige Anforderung erlaubt es vorteilhaft, das Datenübertragungsprofil während einer bestehenden Datenverbindung zu verändern, ohne die Datenverbindung trennen zu müssen. Ferner kann diese Anforderung im Gegensatz zu den meisten RADIUS-Steuerbefehlen ohne eine vorherige Aufforderung der Vermittlungseinheit an diese übermittelt werden.

Eine Ausführungsform des Verfahrens und des Mobilfunksystems ist dadurch gekennzeichnet, dass die Datenübertragungsrate beschränkt wird, wenn festgestellt wird, dass innerhalb eines vorgegebenen zweiten Zeitintervalls ein für das Endgerät angefallenes Datenvolumen und/oder ein für eine das Endgerät enthaltende Gruppe von Endgeräten angefallenes Datenvolumen einen vorgegebenen Schwellenwert überschritten hat. Hierdurch wird die Datenübertragungsrate für die Endgeräte beschränkt, bei denen ein besonders hohes Datenvolumen anfällt, so dass durch die Beschränkung die in dem Mobilfunksystem insgesamt benötigten Ressourcen verringert werden können. Bei dem angefallenen Datenvolumen kann es sich um das zu dem Endgerät übertragene Downlinkdatenvolumen und/oder um das von dem Endgerät gesendete Uplinkdatenvolumen handeln. Nach Ablauf des zweiten Zeitintervalls wird die Beschränkung vorzugsweise wieder aufgehoben und das zweite Zeitintervall neu gestartet.

Um den Nutzer des Endgeräts über eine vorgenommene oder bevorstehende Beschränkung der Datenübertragungsrate zu informieren, sieht eine Ausgestaltung des Verfahrens und des Mobilfunksystems vorteilhaft vor, dass eine Benachrichtigung an das Endgerät gesendet wird, wenn festgestellt wird, dass das angefallene Datenvolumen den Schwellenwert oder einen vorgegebenen Bruchteil des Schwellenwerts erreicht hat. Der Bruchteil ist vorzugsweise kleiner als Eins und kann beispielsweise 90 % betragen.

Eine weitere Ausführungsform des Verfahrens und des Mobilfunksystem beinhaltet, dass die beschränkte Datenübertragungsrate innerhalb eines vorgegebenen Zeitraums, insbesondere während einer vorgegebenen Tageszeit und/oder eines vorgegebenen Wochentags, eingestellt wird. Hierdurch kann die Datenübertragungsrate insbesondere dann beschränkt werden, wenn üblicherweise ein besonders hohes Gesamtdatenvolumen innerhalb des Mobilfunksystems zu übertragen ist. Damit können die in dem Mobilfunksystem bereitzustellenden Ressourcen zur Datenübertragung, die in Abhängigkeit von der höchstmöglichen Last ausgelegt werden, verringert werden.

Ferner zeichnet sich eine Ausgestaltung des Verfahrens und des Mobilfunksystems dadurch aus, dass das Endgerät über ein funkbasiertes Zugangsnetzwerk mit dem Mobilfunknetzwerk verbunden ist, wobei die beschränkte Datenübertragungsrate eingestellt wird, wenn festgestellt wird, dass ein Datenvolumen, welches im Wesentlichen gleichzeitig an Endgeräte zu übertragen ist, die sich in einem vorgegebenen Bereich des Zugangsnetzwerks befinden, einen Schwellenwert überschreitet. Vorteilhaft kann hierdurch bereits kernnetzwerkseitig ein Lastausgleich in Bezug auf die Endgeräte vorgenommen werden, die sich in einem bestimmten Bereich des Zugangsnetzwerks befinden. Dieses ist in der Regel zellular aufgebaut, und bei dem Bereich kann es sich um eine Funkzelle des Zugangsnetzwerks handeln.

Darüber hinaus kann die Begrenzung der Datenübertragungsrate auf vorgegebene Endgeräte beschränkt werden. Daher umfasst eine Weiterbildung des Verfahrens und des Mobilfunksystems, dass die beschränkte Datenübertragungsrate nur dann eingestellt wird, wenn das Endgerät einer Gruppe von Endgeräten angehört, für welche eine Beschränkung vorgesehen ist. Endgeräte, die nicht zu der Gruppe gehören, können von der Beschränkung ausgenommen werden. Diesen Endgeräten wird dann auch innerhalb des Zugangsnetzwerks eine höhere Datenübertragungsrate zugeordnet, da Daten für diese Endgeräte mit einer höheren Datenübertragungsrate an das Funknetzwerk weitergeleitet werden.

Die Vermittlungseinheit ist vorzugsweise als ein GGSN (Gateway GPRS Support Node) ausgestaltet. Aufgrund der Datenverbindung kann das Endgerät insbesondere über das Mobilfunknetzwerk mit einem Datennetzwerk verbunden sein. Hierbei kann es sich beispielsweise um das Internet handeln.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figur beschrieben werden.

### Kurze Beschreibung der Figuren

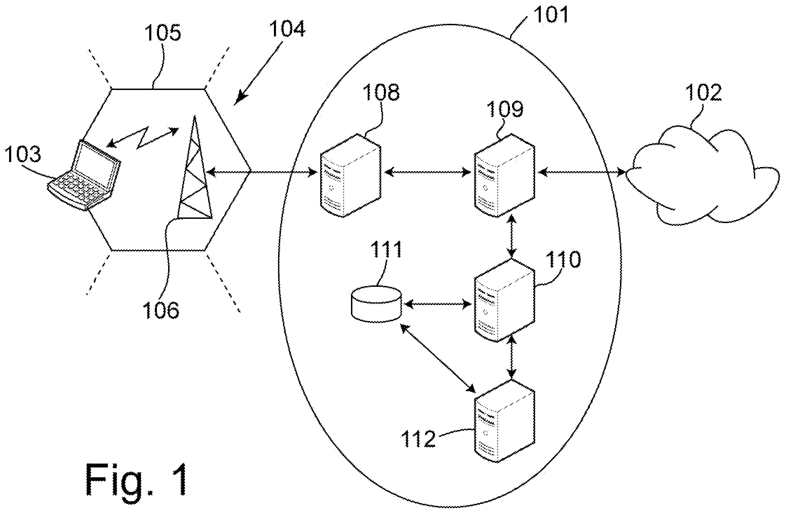

Figur 1 zeigt eine schematische Darstellung eines Mobilfunksystems, in dem eine maximale Datenübertragungsrate einer Datenverbindung zu einem Endgerät beschränkt werden kann.

### Darstellung von Ausführungsbeispielen

In der Figur 1 sind in einer schematischen Darstellung ausgewählte Komponenten eines Mobilfunksystems gezeigt. Die Komponenten werden verwendet, um einen paketvermittelnden Datendienst bereitzustellen, der es Mobilfunkteilnehmern ermöglicht, über ein Mobilfunknetzwerk 101 paketvermittelnde Datenverbindungen zu einem Datennetzwerk 102 aufzubauen, das mit dem Mobilfunknetzwerk 101 verbunden ist. Bei dem Datennetzwerk 102 kann es sich beispielsweise um das Internet oder ein weiteres öffentliches oder privates Datennetzwerk 102 handeln.

Innerhalb der anhand des Datendienstes aufgebauten Datenverbindung können Datenpakete zwischen einem Endgerät 103, das mit einem Mobilfunknetzwerk 101 verbunden ist, und einem in der Figur nicht dargestellten Server des Datennetzwerks 102 ausgetauscht werden. Das Endgerät kann beispielsweise als Mobiltelefon, PDA (Personal Data Assistant), Notebook-Computer oder dergleichen ausgestaltet sein. Der Datenaustausch zwischen dem Endgerät 103 und dem Server basiert vorzugsweise auf dem Internet Protocol (IP). Bei dem Datendienst kann es sich beispielsweise um einen GPRS (General Packet Radio Service) oder EGPRS (Enhanced GPRS) handeln, falls das Mobilfunknetzwerk 101 als GSM- bzw. EDGE-Netzwerk ausgestaltet ist (GSM: Global System for Mobile Communications; EDGE: Enhanced Data Rates for GSM Evolution). Sofern das Mobilfunknetzwerk 101 als ein UMTS-Netzwerk ausgestaltet ist, kann der Datendienst auch als UMTS-Paketdatendienst oder HSDPA bzw. HSPA ausgestaltet sein (UMTS: Universal Mobile Telecommunications System; HSDPA: High Speed Downlink Packet Access; HSPA: High Speed Downlink Packet Access). Gleichfalls kann es sich bei dem Mobilfunknetzwerk 101 auch um SAE/LTE-Netzwerk handeln, in dem entsprechende Paketdatendienste bereitgestellt werden (SAE: System Architecture Evolution, LTE: Long Term Evolution).

Das mobile Endgerät 103 wird mit dem Mobilfunknetzwerk 101 drahtlos über ein funkbasiertes Zugangsnetzwerk 104 verbunden. Das Endgerät 103 kann beispielsweise als Mobiltelefon, PDA (Personal Data Assistent), Notebook-Computer oder dergleichen ausgestaltet sein. Das Endgerät 103 ist in dem HPLMN 101 registriert. Dies geschieht üblicherweise aufgrund eines Vertrages zwischen den Teilnehmern und einem Mobilfunkanbieter, der das Mobilfunknetzwerk 101 betreibt. Die Registrierung des Endgeräts 103 erfolgt insbesondere unter einer dem Endgerät 103 eindeutig zugeordneten Identifikationskennung, die als IMSI (International Mobile Subscriber Identity) ausgestaltet sein kann, sowie einer der Identifikationskennung zugeordneten MSISDN (Mobile Subscriber Integrated Services Digital Network Number), die auch als Rufnummer des Endgeräts 103 dient. Innerhalb des Endgeräts 103 sind Identifikationsdaten in einem Teilnehmeridentifizierungsmodul hinterlegt, das insbesondere verwendet wird, um das Endgerät 103 an dem Mobilfunknetzwerk 101 anzumelden. Das Teilnehmeridentifizierungsmodul ist üblicherweise als eine Chipkarte ausgeführt bzw. in einer Chipkarte enthalten, die in das Endgerät 103 eingesetzt wird. Im Zusammenhang mit GSM-Netzwerken sind die Teilnehmeridentifizierungsmodule beispielsweise als SIM ausgestaltet und im Zusammenhang mit UMTS-Netzwerken als USIM (SIM: Subscriber Identification Module; USIM: Universal Subscriber Identification Module).

Das Zugangsnetzwerk 104 ist zellular aufgebaut und umfasst eine Mehrzahl von Funkzellen 105 denen jeweils eine Basisstation 106 zugeordnet ist. Beispielhaft ist in der Figur 1 lediglich eine Funkzelle 105 dargestellt. Der Basisstation 106 ist ein in der Figur nicht gezeigter Controller zugeordnet, der Funktionen der Basisstation 106 steuert. Hierzu gehört insbesondere die Zuteilung von funktechnischen Ressourcen der Luftschnittstelle auf die in dem Versorgungsbereich der Basisstation 106 befindlichen Endgeräte 103, die diese nutzen können, um mittels des Datendienst übertragene Datenpakte zu empfangen und mittels des Datendienstes zu übertragende Datenpakete zu senden. Um dabei mehreren Endgeräten 103 in einer Zelle gleichzeitig eine Kommunikation mit der Basisstation 106 zu ermöglichen, wird ein geeignetes Multiplexverfahren eingesetzt. Im Falle eines GSM-Netzwerks handelt es sich hierbei um ein TDMA-Verfahren, das in der Regel mit einem FDMA-Verfahren kombiniert wird (TDMA: Time Division Multiple Access; FDMA: Frequency Division Multiple Access). Bei UMTS-Netzwerken ist ein CDMA-Verfahren vorgesehen (CDMA: Code Division Multiple Access).

Die Zuteilung der Downlinkressourcen für die Übertragung von Daten zu einem Endgerät 103 erfolgt in Abhängigkeit von der Datenübertragungsrate, mit der für das Endgerät 103 bestimmte Daten in dem Datennetzwerk 104 empfangen werden und in Abhängigkeit von der Anzahl der Endgeräte 103 in einer Funkzelle 105, zu denen zeitgleich Daten zu übermitteln sind. Entsprechend erfolgt die Zuteilung von Uplinkressourcen für die Übertragung von Daten von einem Endgerät 103 zu dem Zugangsnetzwerk 104 in Abhängigkeit von der Datenübertragungsrate, mit der das Endgerät 103 Daten senden möchte und in Abhängigkeit von der Anzahl der Endgeräte 103 in einer Funkzelle 105, die gleichzeitig Daten senden möchten.

Aufgrund der Ressourcenzuteilung ergeben sich dann insbesondere die Übertragungsraten, mit denen das Endgerät 103 Daten senden und empfangen kann. Da die Ressourcen der Luftschnittstelle unter den in einer Funkzelle 105 befindlichen Endgeräten 103 aufgeteilt werden, sinkt die Datenübertragungsrate in der Regel, wenn mehrere Endgeräte 103 gleichzeitig Daten senden bzw. empfangen. Die Größe der Funkzelle 105 wird dabei so gewählt, dass ausreichende Ressourcen vorhanden sind, um allen typischerweise in der Funkzelle 105 befindlichen Endgeräten 103 das Senden und Empfangen von Daten mit einer hinreichenden Datenübertragungsrate zu ermöglichen. Die Zelllast variiert dabei im Allgemeinen mit der Zeit aufgrund von Veränderungen der in einer Funkzelle 105 befindlichen Endgeräte 103 und aufgrund unterschiedlicher Nutzung des Datendienstes durch die Endgeräte 103. Die Größe der Funkzelle 105 sollte dabei an die maximal auftretende Zelllast, d.h. das maximale auftretende Datenvolumen angepasst sein.

Um unter Nutzung des Datendienstes eine Datenverbindung zu dem Datennetzwerk 102 aufzubauen, meldet sich das Endgerät 103 zunächst anhand einer entsprechenden Anforderung an dem Mobilfunknetzwerk 101 an. Die Anforderung wird über das Zugangsnetzwerk 104, insbesondere von der zuständigen Basisstation 106 zu einer Eingangsvermittlungseinheit 108 weitergeleitet, in deren Versorgungsbereich sich das Endgerät 103 bzw. die Basisstation 106 befindet. Die Eingangsvermittlungseinheit 108, die vorzugsweise als SGSN (Serving GPRS Support Node) ausgeführt ist, ist insbesondere dafür zuständig, von dem Endgerät 103 erhaltene Daten in einer an sich bekannten Weise an nachfolgende Netzwerkknoten weiterzuleiten und umgekehrt.

Nach der Anmeldung wird dem Endgerät 103 eine IP-Adresse zugeordnet, wenn festgestellt worden ist, dass es zur Nutzung des Datendienstes berechtigt ist. Diese wird herangezogen, um IP-Datenpakete an das Endgerät 103 adressieren zu können. Die IP-Adresse wird vorzugsweise von einer weiteren Vermittlungseinheit 109 vergeben, die als ein GGSN (Gateway GPRS Support Node) ausgestaltet ist. Im Allgemeinen enthält ein Mobilfunknetzwerk 101 eine Mehrzahl weiterer Vermittlungseinheiten 109. Die Auswahl der Vermittlungseinheit 109 für die Bearbeitung der Anforderung des Endgeräts 103 erfolgt in einem solchen Fall aufgrund einer entsprechenden Adressierung, die durch das Endgerät 103 vorgenommen wird. Für die Adressierung kann dabei ein der Vermittlungseinheit 109 zugeordneter, so genannter APN (Access Point Name) verwendet werden, der in dem Endgerät 103 hinterlegt ist.

Die Vermittlungseinheit 109 nimmt die Zuordnung der IP-Adresse zu dem Endgerät 103 im Rahmen einer so genannten PDP-Kontext-Aktivierung vor, die zur Erzeugung eines PDP-Kontexts für das Endgerät 103 führt (PDP: Packet Data Protocol). Dieser entspricht einer logischen IP-basierten Verbindung zu dem Endgerät 103, über die Datenpakete zwischen dem Endgerät 103 und dem Datennetzwerk 102 ausgetauscht werden können. Von dem Endgerät 103 gesendete Datenpakete werden dabei über die Eingangsvermittlungseinheit 108 und die Vermittlungseinheit 109 an das Datennetzwerk 102 weitergeleitet. Umgekehrt werden innerhalb des Datennetzwerks 102 abgesendete Datenpakete, die an das Endgerät 103 adressiert sind, über die Vermittlungseinheit 109 und die Eingangsvermittlungseinheit 108 an das Endgerät 103 weitergeleitet. Der PDP-Kontext bleibt in der Regel aktiv, solange das Endgerät 103 an dem Mobilfunknetzwerk 101 angemeldet ist. Die Zuteilung von funktechnischen Ressourcen zu dem Endgerät 103 ist unabhängig von dem bestehenden PDP-Kontext und erfolgt bedarfsweise, wenn Datenpakete von dem Endgerät 103 gesendet werden oder wenn Datenpakete vorliegen, die an das Endgerät 103 zu übermitteln sind.

Die Vermittlungseinheit 109 kommuniziert mit einer Steuereinheit 110, die als AAA-Server ausgestaltet ist. Die Kommunikation erfolgt auf der Grundlage eines geeigneten AAA-Protokolls, bei dem es sich in einer Ausgestaltung um das dem Fachmann grundsätzlich bekannte RADIUS-Protokoll handelt.

Bei der PDP-Kontext-Aktivierung kann es vorgesehen sein, dass von der Steuereinheit 110 zunächst geprüft wird, ob das Endgerät 103 bzw. dessen Nutzer zur Nutzung des Datendienstes unter Verwendung der Vermittlungseinheit 109 berechtigt ist. Die Aktivierung des PDP-Kontexts erfolgt dabei nur dann, wenn eine entsprechende Berechtigung des Nutzers festgestellt wird. Andernfalls wird die PDP-Kontext-Aktivierung von der Vermittlungseinheit 109 verweigert. Die berechtigten Nutzer werden dabei in einer Nutzerdatenbank 111 geführt, die mit der Steuereinheit 110 verbunden ist, und auf welche die Steuereinheit 110 zugreift, um die Nutzerberechtigung festzustellen.

Eine weitere Funktion der Steuereinheit 110 besteht in der Ermittlung des Umfangs, in dem der Datendienst von einzelnen Nutzern genutzt wird. Hierzu wird das Downlink-Datenvolumen, das aus dem Datennetzwerk 102 zu dem Endgerät 103 eines Nutzers übertragen wird, erfasst. Vorzugsweise wird zudem das Uplinkdatenvolumen erfasst, d.h., das Datenvolumen, das von dem Endgerät 103 an das Datennetzwerk 102 gesendet wird. In einer Ausgestaltung protokolliert die Steuereinheit 110 das jedem Endgerät 103 zugeordnete Uplinkdatenvolumen und das Downlinkdatenvolumen, das innerhalb von regelmäßigen Zeitintervallen anfällt, in jeweils einer Datenvolumennachricht, die nach Ablauf des Zeitintervalls weiteren Systemen zur Verfügung gestellt werden kann. Sofern die Gebühren für den Datendienst anhand des Datenvolumens berechnet werden, das einem Nutzer zugeordnet ist, können die Datenvolumennachrichten beispielsweise dazu genutzt werden, das von einem Endgerät 103 in einem Abrechnungszeitraum gesendete und empfangene Datenvolumen zu ermitteln und dem Nutzer des Endgeräts 103 in Rechnung zu stellen.

Darüber hinaus umfasst das in der Figur 1 dargestellte Mobilfunksystem eine mit der Steuereinheit 110 verbundene Begrenzungseinheit 112. Diese legt kernnetzwerkseitig eine maximale Datenübertragungsrate für die mit der Vermittlungseinheit 109 verbundenen Endgeräte 103 fest. Hierbei handelt es sich insbesondere um eine maximale Downlinkübertragungsrate, d.h. die Datenübertragungsrate mit der Daten zu dem Endgerät 103 gesendet werden. In einer Ausgestaltung, auf die auch im Folgenden Bezug genommen wird, kann dabei aus zwei maximalen Datenübertragungsraten ausgewählt werden: Zum einen kann die Datenübertragungsrate für ein Endgerät 103 unbeschränkt sein und zum anderen kann einem Endgerät 103 eine auf einen vorgegebenen Wert beschränkte Datenübertragungsrate zugeordnet werden. Gleichfalls können jedoch auch mehrere auf verschiedene Werte beschränkte Datenübertragungsraten vorgesehen sein, die einem Endgerät 103 zugeordnet werden. Die beschränkte maximale Datenübertragungsrate hat insbesondere einen Wert, der größer als Null ist.

Wenn die maximale Datenübertragungsrate kernnetzwerkseitig nicht beschränkt wird, ergibt sich die Datenübertragungsrate, mit der Daten zu dem Endgerät 103 übertragen werden, aufgrund der Downlinkressourcen, die dem Endgerät 103 auf der Luftschnittstelle durch das Datennetzwerk 104 zugewiesen werden. Die beschränkte maximale Datenübertragungsrate ist hingegen geringer als die maximal auf der Luftschnittstelle realisierbare Datenübertragungsrate. Die Beschränkung wird dadurch herbeigeführt, dass innerhalb des Mobilfunknetzwerks 101 höchstens so viele Datenpakete pro Zeiteinheit an das Endgerät 103 weitergeleitet werden, wie der vorgegebene Wert zulässt. Werden darüber hinaus Datenpakete von dem Datennetzwerk 102 an das Endgerät 103 gesendet, werden diese nicht weitergeleitet und verworfen. Dies führt dazu, dass die Datenübertragungsrate, mit der für das Endgerät 103 bestimmte Daten an das Zugangsnetzwerk 104 gesendet werden, verringert wird. Durch das Zugangsnetzwerk 104 erfolgt dann auf der Grundlage dieser Datenübertragungsrate eine Zuteilung von Ressourcen zu dem Endgerät 103. Die Datenübertragungsrate auf der Luftschnittstelle ist damit immer kleiner oder gleich der dem Endgerät 103 zugeordneten beschränkten maximalen Datenübertragungsrate. Die verworfenen Datenpakete werden aufgrund des für die Datenübertragung verwendeten Protokolls, bei dem es sich beispielsweise um das TCP (Transmission Control Protocol) handelt, von dem Absender erneut gesendet. Dies geschieht beispielsweise aufgrund einer ausbleibenden Bestätigung des Empfangs der Datenpakete durch das Endgerät 103.

Die Begrenzung der Datenübertragungsrate erfolgt vorzugsweise in der Vermittlungseinheit 109. Falls einem Endgerät 103 eine beschränkte Datenübertragungsrate zugeordnet ist, leitet diese maximal ein Datenvolumen weiter, das der eingestellten maximalen Datenübertragungsrate entspricht. In Bezug auf Endgeräte 103, denen kernnetzwerkseitig eine unbeschränkte Datenübertragungsrate zugeordnet ist, werden die an das Endgerät 103 adressierten Datenpakte ohne Beschränkung von der Vermittlungseinheit 109 weitergeleitet. Wenn für ein Endgerät 103 eine beschränkte Datenübertragungsrate vorgesehen ist, dann leitet die Vermittlungseinheit 109 in vorgegebenen Zeitintervallen höchstens ein vorgegebenes Datenvolumen an das Endgerät 103 weiter. Nachdem das vorgegebene maximale Datenvolumen in dem Zeitintervall weitergeleitet worden ist, wird die Weiterleitung von Daten bis zum Ablauf des Zeitintervalls blockiert. Hierdurch ergibt sich eine maximale Datenübertragungsrate für die Übertragung von Daten zu dem Endgerät 103.

Die zuvor beschriebene Blockierung der Weiterleitung von Daten an das Endgerät 103 innerhalb des Zeitintervalls wird bei aktiver Verbindung zu dem Endgerät 103 vorgenommen, insbesondere bei einem aktiven PDP-Kontext für das Endgerät.

Zur Festlegung der maximalen Datenübertragungsrate für ein Endgerät 103 sind in der Vermittlungseinheit 109 Datenübertragungsprofile hinterlegt. Ein erstes Datenübertragungsprofil erlaubt dabei eine unbeschränkte Datenübertragung von dem Datennetzwerk 102 zu dem Endgerät 103. Für jeden beschränkten Wert der Datenübertragungsrate ist jeweils ein weiteres Datenübertragungsprofil vorgesehen, in dem der beschränkte Wert spezifiziert ist. Den mit der Vermittlungsstelle 109 verbundenen Endgeräten 103 wird in der Vermittlungseinheit 109 jeweils ein Datenübertragungsprofil zugeordnet, das der dem entsprechenden Endgerät 103 zugeordneten maximalen Datenübertragungsrate entspricht.

Aufgrund eines entsprechenden Steuerbefehls, der von der Steuereinheit 110 an die Vermittlungseinheit 109 gesendet wird, kann von einem Profil auf ein anderes Profil umgeschaltet werden. Der Steuerbefehl spezifiziert das Endgerät 103 für das die Umschaltung vorgenommen werden soll, anhand einer dem Endgerät 103 zugeordneten Identifikationskennung, wie beispielsweise IP-Adresse oder die MSISDN des Endgeräts 103, sowie das zu aktivierende Datenübertragungsprofil. Als Steuerbefehl wird ein Kommando verwendet, das innerhalb des für die Kommunikation zwischen der Steuereinheit 110 und der Vermittlungseinheit 109 verwendeten Übertragungsprotokolls vorgesehen ist. Vorzugsweise handelt es sich hierbei um einen Steuerbefehl, der ohne eine vorherige Anforderung der Vermittlungseinheit 109 an diese gesendet werden kann. Hierdurch kann die Umschaltung des Profils außerhalb der Vermittlungseinheit 109 initiiert werden. Damit kann die Entscheidungslogik zur Profilumschaltung außerhalb der Vermittlungseinheit 109 implementiert werden, die eine derartige Entscheidungslogik oftmals nicht unterstützt. Ferner wird vorzugsweise ein Steuerbefehl verwendet, mit dem das Datenübertragungsprotokoll während einer bestehenden IP-Sitzung verändert werden kann, so dass diese nicht unterbrochen werden muss, um das Datenübertragungsprofil zu verändern. Hierdurch wird verhindert, dass ein für ein Endgerät 103 aktivierter PDP-Kontext beendet werden und sich das Endgerät 103 erneut anmelden muss, wenn das Datenübertragungsprofil für das Endgerät 103 geändert werden soll.

Sofern es sich bei dem verwendeten AAA-Protokoll um das RADIUS-Protokoll handelt, wird in einer Ausgestaltung das innerhalb einer Erweiterung des RADIUS-Protokolls vorgesehene Change-of-Authorization-Kommando verwendet, um einen Profilwechsel vorzunehmen. Dieses Kommando wird insbesondere in dem Dokument RFC 3576, "Dynamic Authorization Extensions to RADIUS", der IETF (Internet Engineering Task Force) und erlaubt es, Parameter einer IP-Sitzung während der Sitzung zu verändern. Eine Unterbrechung oder Beendigung der Sitzung ist nicht erforderlich. Ferner kann dieses Kommando im Gegensatz zu den meisten übrigen Kommandos des RADIUS-Protokolls ohne eine vorherige Anforderung der Vermittlungseinheit 109 an diese übermittelt werden.

In dem in der Figur 1 gezeigten Mobilfunksystem werden die Datenübertragungsprofile für die mit der Vermittlungseinheit 109 verbundenen Endgeräte 103 durch eine Begrenzungseinheit 112 vorgegeben, die als eine eigenständige Servereinrichtung ausgeführt ist, welche mit der Steuereinheit 110 verbunden ist. Gleichfalls kann die Begrenzungseinheit 112 jedoch auch in die Steuereinheit 110 integriert werden. Die Begrenzung der maximalen Datenübertragungsrate für die mit der Vermittlungseinheit 109 verbundenen Endgeräte 103 erfolgt dabei anhand von vorgegebenen Kriterien, die in der Begrenzungseinheit 112 geprüft werden.

In einer Ausgestaltung ist es vorgesehen, dass die maximale Datenübertragungsrate für Downlinkdaten, die zu einem Endgerät 103 übertragen werden, begrenzt wird, wenn innerhalb eines vorgegebenen Zeitintervalls ein maßgebliches Datenvolumen einen vorgegebenen Wert überschritten hat. Hierbei kann es sich um das Downlinkdatenvolumen handeln, das seit dem Beginn des Zeitintervalls zu dem Endgerät 103 übertragen worden ist, oder um die Summe des für das Endgerät 103 ab dem Beginn des Zeitraums angefallenen Downklink- und Uplinkdatenvolumens. Nach Ablauf des Zeitintervalls wird die Begrenzung wieder aufgehoben, und das Zeitintervall wird neu gestartet. Bei dem Zeitintervall kann es sich um den dem Endgerät 103 zugeordneten Abrechnungszeitraum handeln, in dem die Nutzung des Datendienstes jeweils abgerechnet wird. Gleichfalls kann das Zeitintervall unabhängig von dem Abrechnungszyklus vorgegeben werden und beispielsweise einen Tag oder eine Woche umfassen.

Nach dem Beginn des Zeitintervalls wird einem Endgerät 103 zunächst das Datenübertragungsprofil zugeordnet, das eine unbeschränkte Datenübertragungsrate vorsieht. Ferner wird das für das Endgerät 103 anfallende maßgebliche Datenvolumen in der Begrenzungseinheit 112 protokolliert. Hierzu werden der Begrenzungseinheit 112 die in der Steuereinheit 110 erzeugten Datenvolumennachrichten für das Endgerät 103 bereitgestellt. Anhand der Datenvolumennachrichten wird das anfallende Datenvolumen aufsummiert. Wird festgestellt, dass die Summe des ab dem Beginn des Zeitintervalls angefallenen maßgeblichen Datenvolumens den vorgegebenen Wert überschritten hat, initiiert die Begrenzungseinheit 112 die Umschaltung des Datenübertragungsprofils für das Endgerät 103. Hierzu instruiert die Begrenzungseinheit 112 die Steuereinheit 110, einen Steuerbefehl an die Vermittlungseinheit 109 zu übermitteln, der zur Umschaltung des Datenübertragungsprofils führt. Alternativ wird dieser Steuerbefehl in der Begrenzungseinheit 112 erzeugt und über die Steuereinheit 110 an die Vermittlungseinheit 109 gesendet.

Wenn das Endgerät 103 sich neu an dem Mobilfunknetzwerk 101 anmeldet und ein PDP-Kontext für das Endgerät 103 aktiviert wird, dann wird das zu aktivierende Datenübertragungsprofil vorzugsweise von der Begrenzungseinheit 112 abgefragt und bei der Erzeugung des PDP-Kontexts aktiviert. Die Begrenzungseinheit 112 prüft aufgrund der Abfrage, ob das maßgebliche Datenvolumen für das Endgerät 103 bereits den vorgegebenen Wert überschritten hat. Ist dies der Fall, meldet die Begrenzungseinheit 112, dass das Datenübertragungsprofil zu aktivieren ist, das eine begrenzte Datenübertragungsrate vorsieht. Andernfalls wird gemeldet, dass das Datenübertragungsprofil zu aktivieren ist, das kernnetzwerkseitig eine unbegrenzte Datenübertragungsrate erlaubt. Die Abfrage kann im Rahmen der Prüfung der Berechtigung des Endgeräts 103 zur Nutzung des Datendienstes durch die Steuereinheit 110 vorgenommen werden.

Wenn das vorgegebene Zeitintervall beendet ist, wird die Summe des maßgeblichen Datenvolumens des Endgeräts 103 in der Begrenzungseinheit 112 wieder auf den Wert Null zurückgesetzt und die Protokollierung beginnt von neuem. Zudem wird von der Begrenzungseinheit 112 die Umschaltung des Datenübertragungsprofils auf das unbeschränkte Datenübertragungsprofil initiiert, sofern bei Ablauf des Zeitintervalls für das Endgerät 103 das Datenübertragungsprofil aktiviert ist, das eine beschränkte maximale Datenübertragungsrate vorsieht. Dies geschieht wiederum, indem die Begrenzungseinheit 112 die Steuereinheit 110 dazu instruiert, einen entsprechenden Steuerbefehl an die Vermittlungseinheit 109 zu übermitteln, der zur Umschaltung des Datenübertragungsprofils führt, oder indem in der Begrenzungseinheit 112 ein entsprechender Steuerbefehl erzeugt wird, der über die Steuereinheit 110 an die Vermittlungseinheit 109 gesendet wird.

Über eine Umschaltung auf das die Datenübertragungsrate beschränkende Datenübertragungsprofil wird der Nutzer des Endgeräts 103 in einer Ausgestaltung informiert. Hierzu kann eine in der Begrenzungseinheit 112 erzeugte Nachricht, bei der es sich beispielsweise um eine SMS-Nachricht handelt, an das Endgerät 103 des Nutzers gesendet werden. Alternativ oder zusätzlich kann es vorgesehen sein, dass eine Nachricht an das Endgerät 103 gesendet wird, wenn ein vorgegebener Bruchteil des Werts des Datenvolumens angefallen ist, bei dem eine Beschränkung der Datenübertragungsrate vorgenommen wird. Beispielsweise kann eine solche Nachricht gesendet werden, wenn 90 % des Schwellenwerts erreicht sind. Hierdurch wird der Nutzer frühzeitig über eine bevorstehende Beschränkung der Datenübertragungsrate informiert. Gleichfalls kann es vorgesehen sein, dass der Nutzer durch eine Nachricht darüber informiert wird, dass eine Umschaltung auf das eine unbeschränkte Datenübertragungsrate vorsehende Datenübertragungsprofil vorgenommen worden ist.

Darüber hinaus kann es vorgesehen sein, das der Nutzer des Endgeräts 103 nach der Umschaltung auf das die Datenübertragungsrate beschränkende Datenübertragungsprofil die Beschränkung bereits vor Ablauf des Zeitintervalls aufheben kann. Hierzu wird vorzugsweise von der Begrenzungseinheit 112 oder von einem mit der Begrenzungseinheit 112 verbundenen Server eine interaktive Webseite bereitgestellt, die von dem Nutzer insbesondere mittels des Endgeräts 103 aufgerufen werden kann, um die Beschränkung rückgängig zu machen. Die Adresse der Webseite kann beispielsweise innerhalb der Nachricht angegeben werden, die den Nutzer über die Umschaltung auf das die Datenübertragungsrate begrenzende Datenübertragungsprofil informiert. Um die Beschränkung der Datenübertragungsrate rückgängig zu machen, ist die Entrichtung einer Gebühr erforderlich. Diese kann mittels eines Online-Bezahlverfahrens, wie beispielsweise einer Kreditkartenzahlung, über die Webseite gezahlt, oder über die Mobilfunkrechnung des Nutzers abgerechnet werden. Nachdem die erneute Freischaltung der unbegrenzten maximalen Datenübertragungsrate über die Webseite von dem Nutzer angefordert worden ist, und gegebenenfalls nachdem die erforderliche Gebühr entrichtet worden ist, wird von der Begrenzungseinheit 112 erneut das Datenübertragungsprofil aktiviert, das eine unbeschränkte Datenübertragungsrate vorsieht. Die Protokollierung des maßgeblichen Datenvolumens für das Endgerät 103 kann bis zum Ablauf des aktuellen Zeitintervalls fortgeführt oder beendet werden. Mit Beginn des nachfolgenden Zeitintervalls wird die Protokollierung von neuem ausgehend von dem Wert Null begonnen.

Während bei der zuvor beschriebenen Ausgestaltung eine Begrenzung der Datenübertragungsrate dann vorgenommen wird, wenn das Downlinkdatenvolumen oder das Gesamtdatenvolumen für ein Endgerät 103 innerhalb eines vorgegebenen Zeitraums einen Schwellenwert übersteigt, kann alternativ auch das Downlinkdatenvolumen oder das Gesamtdatenvolumen einer vorgegebenen Gruppe von Endgeräten 103 zugrunde gelegt werden. Hierbei kann es sich um die Endgeräte 103 handeln, die aufgrund der Mobilfunkverträge ihrer Nutzer miteinander in Beziehung stehen. In diesem Fall wird von der Begrenzungseinheit 112 die Summe der maßgeblichen Datenvolumina der in der Gruppe enthaltenen Endgeräte 103 innerhalb des vorgesehenen Zeitraums protokolliert. Überschreitet diese einen vorgegebenen Schwellenwert, werden die Datenübertragungsprofile aller Gruppenmitglieder auf das die Datenübertragungsrate begrenzende Datenübertragungsprofil umgeschaltet. Nach Ablauf des Zeitraums wird die Beschränkung aufgehoben, indem wieder auf das unbeschränkte Datenübertragungsprofil umgeschaltet wird.

In einer weiteren Ausgestaltung ist vorgesehen, dass die Datenübertragungsrate in Abhängigkeit von der Tageszeit und/oder dem Wochentag begrenzt wird. Auf diese Weise kann die maximale Datenübertragungsrate einer oder aller mit der Vermittlungseinheit 109 verbundenen Endgeräte 103 insbesondere zu Zeiten reduziert werden, in denen ein hohes Gesamtdatenvolumen innerhalb des Mobilfunknetzwerks 101 und des Zugangsnetzwerks 104 erwartet wird. Die betreffenden Zeiträume sind in der Begrenzungseinheit 112 hinterlegt. Stellt die Begrenzungseinheit 112 fest, dass ein vorgegebener Zeitraum vorliegt, dann initiiert die Begrenzungseinheit 112 in der zuvor beschriebenen Weise für mit der Vermittlungseinheit 109 verbundene Endgeräte 103 eine Umschaltung auf das die maximale Datenübertragungsrate begrenzende Datenübertragungsprofil, sofern dieses nicht bereits aktiviert worden ist. Wenn ein Endgerät 103 sich innerhalb eines der vorgegebenen Zeiträume neu an dem Mobilfunknetzwerk 101 anmeldet, dann wird für dieses Endgerät 103 gegebenenfalls das die Datenübertragungsrate begrenzende Datenübertragungsprofil aktiviert. Wenn die Begrenzungseinheit 112 feststellt, dass der vorgegebene Zeitraum beendet ist, dann wird für die mit der Vermittlungseinheit 109 verbundenen Endgeräte 103 wieder auf das eine unbegrenzte Datenübertragungsrate vorsehende Datenübertragungsprofil umgeschaltet, sofern für die Endgeräte 103 nicht eine von dem Zeitraum unabhängige Beschränkung der maximalen Datenübertragungsrate vorgesehen ist - insbesondere eine Beschränkung aufgrund des für die Endgeräte 103 anfallenden Datenvolumens.

In der zuvor beschriebenen Ausführungsform kann eine Begrenzung der maximalen Datenübertragungsrate für alle mit der Vermittlungseinheit 109 verbundene Endgeräte 103 vorgesehen sein. Gleichfalls kann es vorgesehen sein, dass die Begrenzung nur für vorgegebene mit der Vermittlungseinheit 109 verbundene Endgeräte 103 vorgenommen wird, während die maximale Datenübertragungsrate für andere mit der Vermittlungseinheit 109 verbundene Endgeräte 103 nicht vorgenommen wird. Ob für ein Endgerät 103 eine Begrenzung vorgesehen ist, kann sich aufgrund des Mobilfunkvertrags ergeben, den der Nutzer des Endgeräts 103 mit dem Betreiber des Mobilfunknetzwerks 101 geschlossen hat. Die vorgegebenen Endgeräte 103, für die eine Beschränkung der maximalen Datenübertragungsrate vorgesehen ist, sind in der Begrenzungseinheit 112 oder in der Nutzerdatenbank 111 hinterlegt. Im letzteren Fall greift die Begrenzungseinheit 112 auf die Nutzerdatenbank 111 zu, um die betreffenden Endgeräte 103 zu ermitteln.

Weiterhin kann es vorgesehen sein, dass eine Begrenzung der maximalen Datenübertragungsrate für Endgeräte 103 vorgenommen wird, die sich in einer Funkzelle 105 des Zugangsnetzwerks 104 befinden, wenn die Zelllast in dieser Funkzelle 105, d.h. das Gesamtdatenvolumen in der Funkzelle 105, einen vorgegebenen Wert überschreitet. Dabei kann die Summe aus Downlink- und Uplinkdatenvolumen zugrunde gelegt werden oder lediglich das Downlinkdatenvolumen der in der Funkzelle 105 befindlichen Endgeräte 103. Die Ermittlung des Datenvolumens erfolgt in einer Ausgestaltung in der Begrenzungseinheit 112. Zu diesem Zweck wird an die Begrenzungseinheit 112 für die mit der Vermittlungseinheit 109 verbundenen Endgeräte 103 jeweils die Funkzelle 105 gemeldet, in der sich diese aufhalten. Anhand der von der Steuereinheit 110 bereitgestellten Datenvolumennachrichten kann die Begrenzungseinheit 112 dann das maßgebliche Datenvolumen für die verschiedenen Funkzellen 105 ermitteln. Übersteigt dieses einen vorgegebenen Wert, initiiert die Begrenzungseinheit 112 in der zuvor beschriebenen Weise für in der Funkzelle 105 befindliche Endgeräte 103 eine Umschaltung auf das die maximale Datenübertragungsrate begrenzende Datenübertragungsprofil, sofern dieses nicht bereits aktiviert worden ist. Wenn die Begrenzungseinheit 112 feststellt, dass das maßgebliche Datenvolumen in der Funkzelle 105 einen vorgegebenen Schwellenwert unterschritten hat, dann wird für die in der Funkzelle 105 befindlichen Endgeräte 103 wieder auf das eine unbegrenzte maximale Datenübertragungsrate vorsehende Datenübertragungsprofil umgeschaltet, sofern für die Endgeräte 103 nicht eine von der Zelllast unabhängige Beschränkung der maximalen Datenübertragungsrate vorgesehen ist. Wenn ein Endgerät 103 sich aus der betreffenden Funkzelle 105 neu an dem Mobilfunknetzwerk 101 anmeldet, während das maßgebliche Datenvolumen größer als der Schwellenwert ist, dann wird für dieses Endgerät 103 gegebenenfalls das die Datenübertragungsrate begrenzende Datenübertragungsprofil aktiviert.

Wie in der zuvor beschriebenen Ausgestaltung kann auch eine zelllastabhängige Begrenzung der maximalen Datenübertragungsrate für alle in der betreffenden Funkzelle 105 befindlichen Endgeräte 103 vorgesehen sein. Gleichfalls kann es vorgesehen sein, dass die Begrenzung nur für vorgegebene Endgeräte 103 vorgenommen wird, während die maximale Datenübertragungsrate für andere nicht vorgenommen wird. Ob für ein Endgerät 103 eine Begrenzung vorgesehen ist, kann sich wiederum aufgrund des Mobilfunkvertrags ergeben, den der Nutzer des Endgeräts 103 mit dem Betreiber des Mobilfunknetzwerks 101 geschlossen hat.

Anhand der zelllastabhängigen Begrenzung der maximalen Datenübertragungsrate kann die funknetzwerkseitige Ressourcenzuteilung vereinfacht werden. Ferner kann eine Begrenzung der maximalen Datenübertragungsrate auf einfache Weise auf vorgegebene Endgeräte 103 beschränkt werden. Funknetzwerkseitig könnte eine derartige Begrenzung höchstens mit einem wesentlich größeren Aufwand realisiert werden.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen.

In den Patentansprüchen angegebene Bezugszeichen sind nicht als Beschränkungen der eingesetzten Mittel und Schritte anzusehen.

## Patentansprüche

1. Verfahren zum Begrenzen einer Datenübertragungsrate einer paketvermittelnden Datenverbindung über eine Vermittlungseinheit (109) eines Mobilfunknetzwerks (101) zu einem mobilen Endgerät (103), wobei die Vermittlungseinheit (109) Datenpakete nach Maßgabe eines der Datenverbindung zugeordneten Datenübertragungsprofils an das Endgerät (103) weiterleitet, **dadurch gekennzeichnet, dass** wenigstens ein erstes und ein zweites Datenübertragungsprofil vorgesehen sind, die unterschiedliche weiter zu leitende Datenvolumina je Zeiteinheit vorsehen, wobei ein erstes weiterzuleitendes Datenvolumen je Zeiteinheit eine erste maximale Datenübertragungsrate festlegt und dem ersten Datenübertragungsprofil zugeordnet ist, wobei ein zweites weiterzuleitendes Datenvolumen je Zeiteinheit eine zweite maximale Datenübertragungsrate festlegt und dem zweitem Datenübertragungsprofil zugeordnet ist, wobei die zweite maximale Datenübertragungsrate geringer ist als die erste maximale Datenübertragungsrate, wobei dem Endgerät (103) zunächst das erste Datenübertragungsprofil zugeordnet ist, wobei die Vermittlungseinheit (109) in einem vorgegebenen ersten Zeitintervall eine Weiterleitung von Daten an das Endgerät (103) für den Rest des ersten Zeitintervalls begrenzt, wenn festgestellt wird, dass ein vorbestimmtes Datenvolumen des ersten Datenübertragungsprofils in dem ersten Zeitintervall an das Endgerät (103) weitergeleitet worden ist, und wobei das erste Datenübertragungsprofil nach der Feststellung, dass das vorbestimmte Datenvolumen in dem ersten Zeitintervall an das Endgerät (103) weitergeleitet worden ist, während des ersten Zeitintervalls durch das zweite Datenübertragungsprofil ersetzt wird, um die Datenübertragungsrate zu beschränken, wobei die Ersetzung vom ersten Datenübertragungsprofil zum zweiten Datenübertragungsprofil während der bestehenden Datenverbindung bei einem aktiven PDP-Kontext aufgrund eines von einer Steuereinheit (110) an die Vermittlungseinheit (109) gesendeten Steuerbefehls vorgenommen wird.

2. Verfahren nach Anspruch 1, wobei die Ersetzung aufgrund einer Change-of-Authorization-Anforderung erfolgt, die von der Steuereinheit (110) an die Vermittlungseinheit (109) übermittelt wird.

3. Verfahren nach einem der vorangegangenen Ansprüche, bei dem die Datenübertragungsrate beschränkt wird, wenn festgestellt wird, dass innerhalb eines vorgegebenen zweiten Zeitintervalls ein für das Endgerät (103) angefallenes Datenvolumen und/oder ein für eine das Endgerät (103) enthaltende Gruppe von Endgeräten (103) angefallenes Datenvolumen einen vorgegebenen Schwellenwert überschritten hat.

4. Verfahren nach Anspruch 3, bei dem eine Benachrichtigung an das Endgerät (103) gesendet wird, wenn festgestellt wird, dass das angefallene Datenvolumen den Schwellenwert oder einen vorgegebenen Bruchteil des Schwellenwerts erreicht hat.

5. Verfahren nach einem der vorangegangenen Ansprüche, wobei es sich bei der Vermittlungseinheit (109) um einen Gateway GPRS Support Node handelt.

6. Verfahren nach einem der vorangegangenen Ansprüche, wobei das Endgerät (103) aufgrund der Datenverbindung über das Mobilfunknetzwerk (101) mit einem Datennetzwerk (102) verbunden ist.

7. Mobilfunksystem zum Begrenzen einer Datenübertragungsrate einer paketvermittelnden Datenverbindung zu einem mit dem Mobilfunksystem verbundenen mobilen Endgerät (103), umfassend eine Vermittlungseinheit (109), wobei die Vermittlungseinheit (109) Datenpakete nach Maßgabe eines der Datenverbindung zugeordneten Datenübertragungsprofils an das Endgerät (103) weiterleitet, **dadurch gekennzeichnet, dass** wenigstens ein erstes und ein zweites Datenübertragungsprofil vorgesehen sind, die unterschiedliche weiterzuleitenden Datenvolumina je Zeiteinheit vorsehen, wobei dem Endgerät (103) zunächst das erste Datenübertragungsprofil zugeordnet ist, wobei ein erstes weiterzuleitendes Datenvolumen je Zeiteinheit eine erste maximale Datenübertragungsrate festlegt und dem ersten Datenübertragungsprofil zugeordnet ist, wobei ein zweites weiterzuleitendes Datenvolumen je Zeiteinheit eine zweite maximale Datenübertragungsrate festlegt und dem zweitem Datenübertragungsprofil zugeordnet ist, wobei die zweite maximale Datenübertragungsrate geringer ist als die erste maximale Datenübertragungsrate, wobei die Vermittlungseinheit (109) dazu ausgestaltet ist, festzustellen, dass ein vorbestimmtes Datenvolumen des ersten Datenübertragungsprofils in einem Zeitintervall an das Endgerät weitergeleitet worden ist und daraufhin die Übertragung weiterer Daten an das Endgerät (103) zu begrenzen bis das Zeitintervall beendet ist, wobei das erste Datenübertragungsprofil nach der Feststellung, dass das vorbestimmte Datenvolumen in dem ersten Zeitintervall an das Endgerät (103) weitergeleitet worden ist, während des ersten Zeitintervalls durch das zweite Datenübertragungsprofil zu ersetzen, um die Datenübertragungsrate zu beschränken, und die Ersetzung vom ersten Datenübertragungsprofil zum zweiten Datenübertragungsprofil während der bestehenden Datenverbindung bei einem aktiven PDP-Kontext aufgrund eines von einer Steuereinheit (110) an die Vermittlungseinheit (109) gesendeten Steuerbefehls vorzunehmen.

## Claims

1. A method for restricting a data rate of a packet-switched data connection via a switching unit (109) of a mobile communication network (101) to a mobile terminal (103), wherein the switching unit (109) forwards data packets to the terminal (103) based upon a data transmission profile assigned to the data connection, **characterized in that**
at least a first and a second data transmission profile are provided, which provide different data volumina to be forwarded per time unit, wherein a first data volume to be forwarded per time unit sets a first maximum data transmission rate and is assigned to the first data transmission profile, wherein a second data volume to be forwarded per time unit sets a second maximum data transmission rate and is assigned to the second data transmission profile, wherein the second maximum data transmission rate is smaller than the first data transmission rate, wherein the terminal (3) is initially assigned the first data transmission profile, wherein the switching unit (109), in a predetermined first time interval, restricts a forwarding of data to the terminal (103) for the rest of the first time interval when it is determined that a predetermined data volume of the first data transmission profile has been forwarded to the terminal (3) in the first time interval, and wherein the first data transmission profile, after the determination that the predetermined data volume has been forwarded to the terminal (3) in the first time interval, is replaced with the second data transmission profile to restrict the data transmission rate, wherein the replacement from the first data transmission profile to the second data transmission profile is effected with an active PDP context due to a control command sent from a control unit (110) to the switching unit (109) while the data connection is active.

2. The method according to claim 1,
wherein the replacement is effected due to a change-of-authorization which is transmitted from the control unit (110) to the switching unit (109).

3. The method according to one of the preceding claims, in which the data transmission rate is restricted if it is determined that a data volume incurred for the terminal (3) and/or for a group of terminals (3) containing the terminal (3) within a predetermined second time interval exceeded a predetermined threshold value.

4. The method according to claim 3, in which a notification is sent to the terminal (3) if it is determined that the incurred data volume reached the threshold value or a predetermined fraction of the threshold value.

5. The method according to one of the preceding claims, wherein the switching unit (109) is a Gateway GPRS Support Node.

6. The method according to one of the preceding claims, wherein the terminal (103) is connected to a data network (102) via the mobile communication network (101) due to the data connection.

7. A mobile communication system for restricting a data transmission rate of a packet-switched data connection to a mobile terminal (103) connected to the mobile communication system, including a switching unit (109), wherein the switching unit (109) forwards data packets to the terminal (103) based upon a data transmission profile assigned to the data connection, **characterized in that** at least a first and a second data transmission profile are provided, which provide different data volumina to be forwarded per time unit, wherein the terminal (103) is initially assigned the first data transmission profile, wherein a first data volume to be forwarded per time unit sets a first maximum data transmission rate and is assigned to the first data transmission profile, wherein a second data volume to be forwarded per time unit sets a second maximum data transmission rate and is assigned to the second data transmission profile, wherein the second maximum data transmission rate is smaller than the first data transmission rate, wherein the switching unit (109) is configured to determine that a predetermined data volume of the first data transmission profile has been forwarded to the terminal in a time interval and to restrict the transmission of further data to the terminal (103) thereupon, until the time interval ends, wherein the first data transmission profile, after the determination that the predetermined data volume has been forwarded to the terminal (3) in the first time interval, is replaced with the second data transmission profile to restrict the data transmission rate, and to effect the replacement from the first data transmission profile to the second data transmission profile with an active PDP context due to a control command sent from a control unit (110) to the switching unit (109) while the data connection is active.

## Revendications

1. Procédé de limitation d'un taux de transmission de données d'une liaison de données à commutation de paquets par l'intermédiaire d'une unité de commutation (109) d'un réseau de radio mobile (101) vers un terminal mobile (103), l'unité de commutation (109) acheminant des paquets de données au terminal (103) suivant un profil de transmission de données attribué à la liaison de données, **caractérisé en ce qu'**au moins un premier et un deuxième profils de transmission de données sont ménagés, lesquels prévoient différents volumes de données à acheminer par unité de temps, un premier volume de données à acheminer par unité de temps déterminant un premier taux de transmission de données maximal et étant attribué au premier profil de transmission de données, un deuxième volume de données à acheminer par unité de temps déterminant un deuxième taux de transmission de données maximal et étant attribué au deuxième profil de transmission de données, le deuxième taux de transmission de données maximal étant inférieur au premier taux de transmission de données maximal, le premier profil de transmission de données étant d'abord attribué au terminal (103), l'unité de commutation (109), dans un premier intervalle de temps défini, limitant un acheminement de données au terminal (103) pour le reste du premier intervalle de temps lorsqu'il est constaté qu'un volume de données prédéterminé du premier profil de transmission de données a été acheminé au terminal (103) dans le premier intervalle de temps, et le premier profil de transmission de données, après la constatation que le volume de données prédéterminé a été acheminé au terminal (103) dans le premier intervalle de temps, étant remplacé, pendant le premier intervalle de temps, par le deuxième profil de transmission de données afin de limiter le taux de transmission de données, le remplacement du premier profil de transmission de données par le deuxième profil de transmission de données étant réalisé pendant la liaison de données existante dans un contexte PDP actif en raison d'une instruction de commande émise à l'unité de commutation (109) par une unité de commande (110).

2. Procédé selon la revendication 1,
le remplacement étant réalisé en raison d'une demande de changement d'autorisation qui est transmise à l'unité de commutation (109) par l'unité de commande (110).

3. Procédé selon l'une quelconque des revendications précédentes, dans lequel le taux de transmission de données est limité lorsqu'il est constaté que pendant un deuxième intervalle de temps prédéfini, un volume de données effectué pour le terminal (103) et/ou un volume de données effectué pour un groupe de terminaux (103) contenant le terminal (103) ont dépassé une valeur seuil prédéfinie.

4. Procédé selon l'une quelconque des revendications précédentes, dans lequel une notification est émise au terminal (103) lorsqu'il est constaté que le volume de données effectué a atteint la valeur seuil ou une fraction prédéfinie de la valeur seuil.

5. Procédé selon l'une quelconque des revendications précédentes, dans lequel l'unité de commutation (109) est un noeud de support du service GPRS (Gateway GPRS Support Node).

6. Procédé selon l'une quelconque des revendications précédentes, dans lequel le terminal (103) est connecté à un réseau de données (102) par l'intermédiaire du réseau radio mobile (101) en raison de la liaison de données.

7. Système radio mobile destiné à limiter un taux de transmission de données d'une liaison de données à commutation de paquets vers un terminal mobile (103) relié au système radio mobile, comprenant une unité de commutation (109), l'unité de commutation (109) acheminant des paquets de données au terminal (103) suivant un profil de transmission de données attribué à la liaison de données, **caractérisé en ce qu'**au moins un premier et un deuxième profils de transmission de données sont ménagés, lesquels prévoient différents volumes de données à acheminer par unité de temps, d'abord le premier profil de transmission de données étant attribué au terminal (103), un premier volume de données à acheminer par unité de temps déterminant un premier taux de transmission de données maximal et étant attribué au premier profil de transmission de données, un deuxième volume de données à acheminer par unité de temps déterminant un deuxième taux de transmission de données maximal et étant attribué au deuxième profil de transmission de données, le deuxième taux de transmission de données maximal étant inférieur au premier taux de transmission de données maximal, l'unité de commutation (109) étant configurée pour constater qu'un volume de données prédéterminé du premier profil de transmission de données a été acheminé au terminal pendant un intervalle de temps, et, après cela, pour limiter la transmission d'autres données au terminal (103) jusqu'à ce que l'intervalle de temps soit achevé, le premier profil de transmission de données, après la constatation que le volume de données prédéterminé a été acheminé pendant le premier intervalle de temps, étant à remplacer par le deuxième profil de transmission de données pendant le premier intervalle de temps afin de limiter le taux de transmission de données, et le remplacement du premier profil de transmission de données par le deuxième profil de transmission de données étant à réaliser pendant la liaison de données existante dans un contexte PDP actif en raison d'une instruction de commande émise à l'unité de commutation (109) par une unité de commande (110).
